(19) **Europäisches Patentamt / European Patent Office / Office européen des brevets**

(11) **EP 3 457 787 A1**

(12) **EUROPEAN PATENT APPLICATION**
published in accordance with Art. 153(4) EPC

(43) Date of publication:
**20.03.2019 Bulletin 2019/12**

(21) Application number: **17796063.0**

(22) Date of filing: **02.05.2017**

(51) Int Cl.:
**H04W 72/04** (2009.01)    **H04W 52/28** (2009.01)

(86) International application number:
**PCT/JP2017/017239**

(87) International publication number:
**WO 2017/195702 (16.11.2017 Gazette 2017/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.05.2016   JP 2016094940**

(71) Applicant: **NTT DOCOMO, INC.**
**Chiyoda-ku**
**Tokyo 100-6150 (JP)**

(72) Inventors:
• **SANO, Yousuke**
  **Tokyo 100-6150 (JP)**
• **TAKEDA, Kazuaki**
  **Tokyo 100-6150 (JP)**
• **TAKEDA, Kazuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **WIRELESS COMMUNICATION DEVICE AND WIRELESS COMMUNICATION METHOD**

(57)    A radio communication apparatus functioning as a transmitter in a radio communication system including the transmitter and a receiver includes a first data generation unit that generates first data which are to be transmitted in accordance with a first transmission scheme, a second data generation unit that generates second data which are to be transmitted in accordance with a second transmission scheme, a transmission parameter determination unit that determines a first transmission parameter for the first data and a second transmission parameter for the second data, and a transmission unit that, when the second data are generated during transmission of the first data, punctures a portion of a resource allocated for the transmission of the first data, transmits the first data using the first transmission parameter in an unpunctured portion, and transmits the second data using the second transmission parameter in the punctured portion.

FIG.2

TRANSMISSION DURATION OF URLLC
(FOR EXAMPLE, 2 SYMBOLS)

URLLC DATA

URLLC

FREQUENCY

eMBB

TIME

L1/L2 CONTROL INFORMATION FOR eMBB

eMBB DATA

PUNCTURING OF eMBB DATA

EP 3 457 787 A1

**Description**

TECHNICAL FIELD

The present invention relates to a radio communication apparatus and a radio communication method in a radio communication system.

BACKGROUND ART

Currently, in the 3rd generation partnership project (3GPP), a next-generation system called 5G is under discussion as a successor of long term evolution-advanced (LTE-A) which is one of the fourth generation radio communication systems. In 5G, three use cases, that is, extended mobile broadband (eMBB), massive machine type communication (mMTC), and ultra reliability and low latency communication (URLLC) are mainly considered (see Non-Patent Document 1).

URLLC aims to implement radio communication with low delay and high reliability. As measures to implement low delay in URLLC, introduction of a short TTI length (also referred to as a "subframe length" or a "subframe interval"), shorter control delay from packet generation to data transmission, and so on are under discussion. Furthermore, as measures to implement high reliability in URLLC, introduction of an encoding scheme and a modulation scheme with a low coding rate for implementing a lower bit error rate, utilization of diversity, and so on are under discussion.

As a use case of URLLC, mission-critical machine type communication (MTC) such as remote medical care or vehicle behavior control for accident prevention is mainly considered.

PRIOR ART DOCUMENTS

NON-PATENT DOCUMENTS

Non-Patent Document 1: NTT DOCOMO, "3GPP™ Work Item Description", 3GPP TSG RAN Meeting #71, RP-160671, 7-10 March, 2016

SUMMARY OF THE INVENTION

PROBLEM TO BE SOLVED BY THE INVENTION

In URLLC, there is a possibility that data with high urgency are unexpectedly generated, and thus it is necessary to transmit unexpectedly-generated data with low delay and high reliability. In addition to URLLC, even in transmission schemes of other communication services such as mMTC, LTE, license-assisted access (LAA), and/or eMBB, there is a possibility that data with high urgency are unexpectedly generated.

Such data with high urgency may be generated during transmission of other data. For example, a packet of URLLC data may be generated during transmission of eMBB data. In this case, if transmission of data with high urgency (for example, URLLC) starts after transmission of other data (for example, eMBB) is completed, delay occurs, and it may be unable to satisfy the requirement of the low delay.

However, if data with high urgency are transmitted during transmission of other data, signals of these data may interfere with each other and there is a possibility that a receiver is unable to properly detect the data. In order to reduce interference between the signals of these data, a technique of puncturing resources of other data to transmit data with high urgency can be considered, but it is unable to satisfy the requirements of the high reliability, the low delay, and so on unless a transmission parameter for the data with high urgency is properly determined.

It is an object of the present invention to transmit, with low delay, data with high urgency, while reducing interference between the data with high urgency and other data.

MEANS FOR SOLVING PROBLEM

A radio communication apparatus according to one aspect of the present invention is a radio communication apparatus functioning as a transmitter in a radio communication system including the transmitter and a receiver, and includes a first data generation unit that generates first data which are to be transmitted in accordance with a first transmission scheme, a second data generation unit that generates second data which are to be transmitted in accordance with a second transmission scheme, a transmission parameter determination unit that determines a first transmission parameter for the first data and a second transmission parameter for the second data, and a transmission unit that, when the second data are generated during transmission of the first data, punctures a portion of a resource allocated for the transmission of the first data, transmits the first data using the first transmission parameter in an unpunctured portion, and transmits the second data using the second transmission parameter in the punctured portion.

EFFECT OF THE INVENTION

According to the present invention, it is possible to transmit, with low delay, data with high urgency, while reducing interference between the data with high urgency and other data.

BRIEF DESCRIPTION OF DRAWINGS

Fig. 1 is a schematic diagram illustrating a radio communication system according to an embodiment of the present invention;
Fig. 2 is a schematic diagram illustrating an example of transmitting URLLC data during transmission of eMBB data;
Fig. 3 is a sequence diagram of a radio communication method in a radio communication system according to an embodiment of the present invention;
Fig. 4 is a diagram illustrating an example of transmitting URLLC data within a band of eMBB data;
Fig. 5A is a diagram illustrating a case of transmitting URLLC data within a band of eMBB data;
Fig. 5B is a diagram illustrating a case of transmitting URLLC data within and out of a band of eMBB data;
Fig. 6 is a diagram illustrating an example of transmission power control of URLLC data;
Fig. 7 is a diagram illustrating an example of a correspondence between an MCS for eMBB data and an MCS for URLLC data;
Fig. 8 is a block diagram illustrating a functional configuration of a transmitter according to an embodiment of the present invention;
Fig. 9 is a block diagram illustrating a functional configuration of a receiver according to an embodiment of the present invention; and
Fig. 10 is a diagram illustrating an example of a hardware configuration of a transmitter or a receiver according to an embodiment of the present invention.

DETAILED DESCRIPTION OF THE PREFERRED EMBODIMENTS

Hereinafter, an embodiment of the present invention will be described with reference to the accompanying drawings.

In the following embodiment, a radio communication apparatus functioning as a transmitter or a receiver in a radio communication system including the transmitter and the receiver will be described. When second data to be transmitted in accordance with a second transmission scheme (for example, URLLC) are generated during transmission of first data to be transmitted in accordance with a first transmission scheme (for example, eMBB), the radio communication apparatus functioning as the transmitter punctures a portion of a resource allocated for transmission of the first data, transmits the first data in an unpunctured portion, and transmits the second data in the punctured portion. In this case, the radio communication apparatus determines a first transmission parameter for the first data and a second transmission parameter for the second data, and transmits the first data and the second data using the first transmission parameter and the second transmission parameter, respectively. The radio communication apparatus functioning as the receiver detects that the second data are transmitted in accordance with the second transmission scheme in the punctured portion, receives the first data using the first transmission parameter in the unpunctured portion, and receives the second data using the second transmission parameter in the punctured portion. Accordingly, the radio communication apparatus can transmit the second data with low delay. In the following embodiment, eMBB and URLLC will be described as examples of the first transmission scheme and the second transmission scheme, respectively, but any combination of eMBB, URLLC, mMTC, LTE, LAA, eMBB, and/or a transmission scheme of another communication service may be used as the first transmission scheme and the second transmission scheme. Further, LTE is used in a broad meaning including not only a communication system corresponding to Release 8 or 9 of 3GPP, but also a communication system corresponding to Release 10, 11, 12, or 13 of 3GPP and a fifth generation communication system corresponding to Release 14 or later of 3GPP. In the following embodiment, data transmitted in accordance with eMBB are referred to as "eMBB data", and data transmitted in accordance with URLLC are referred to as "URLLC data".

<System configuration>

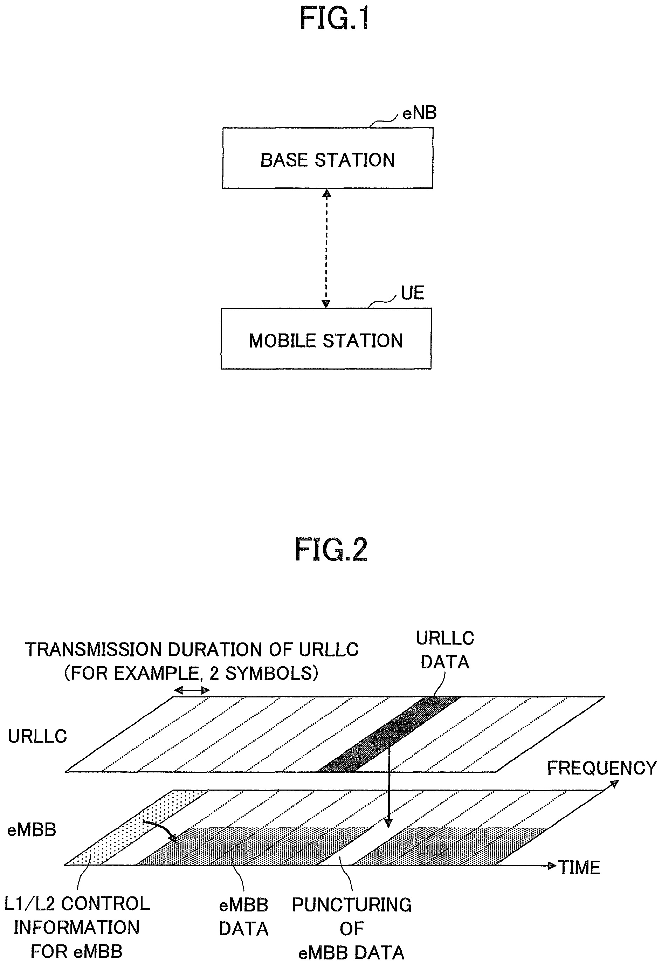

Fig. 1 is a schematic diagram illustrating an exemplary configuration of a radio communication system according to an embodiment of the present invention. As illustrated in Fig. 1, the radio communication system according to the embodiment of the present invention includes a base station eNB and a mobile station UE. In the example of Fig. 1, one base station eNB and one mobile station UE are illustrated, but a plurality of base stations eNBs may be included or a plurality of mobile stations UEs may be included.

The base station eNB can accommodate one or more (for example, three) cells (also referred to as "sectors"). When the base station eNB accommodates a plurality of cells, the entire coverage area of the base station eNB can be divided into a plurality of smaller areas, and a communication service can be provided in each smaller area through a base station subsystem (for example, a small indoor base station remote radio head (RRH)). The term "cell" or "sector" refers to part or whole of the coverage area in which the base station and/or the base station subsystem provides a communication service. Further, the terms "base station", "eNB", "cell", and "sector" can be used interchangeably in this specification. The base station eNB may be also referred to as a fixed station, a Node B, an eNode B (eNB), an access point, a femto cell, a small cell, or the like.

The mobile station UE may be also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or any other suitable term by those skilled in the art.

The base station eNB and the mobile station UE perform downlink (DL) communication and uplink (UL) communication using a predetermined band. The predetermined band may be an LTE system band (for example, 20 MHz) or may be a band (for example, 1.4 MHz or 180 kHz) narrower than the LTE system band.

First, signals used in downlink communication will be described.

The mobile station UE receives downlink control information (DCI) using a downlink control channel arranged in a predetermined band, and the downlink control channel may be also referred to as a "physical downlink control channel (PDCCH)" or an "enhanced physical downlink control channel (ePDCCH)".

Further, the mobile station UE receives downlink data using a downlink shared channel (a downlink data channel) arranged in a predetermined band, and the downlink shared channel may be also referred to as a "physical downlink shared channel (PDSCH)".

Further, a data demodulation reference signal is used for propagation path estimation, symbol timing synchronization, reception quality measurement, and so on for demodulating a data signal. The reference signal can be abbreviated as an RS and can be also referred to as a pilot depending on a standard to be applied. The data demodulation reference signal includes a demodulation reference signal (DMRS) and a cell-specific reference signal (CRS).

Further, a channel state information reference signal (CSI-RS) is used as a reference signal for quality measurement.

Next, signals used in uplink communication will be described.

The mobile station UE transmits uplink data using an uplink shared channel (an uplink data channel) arranged in a predetermined band, and the uplink shared channel may be also referred to as a "physical uplink shared channel (PUSCH)".

Further, a data demodulation reference signal is used for propagation path estimation, symbol timing synchronization, reception quality measurement, and so on for demodulating a data signal. The data demodulation reference signal may be also referred to as a "demodulation reference signal (DMRS)".

A sounding reference signal (SRS) is used as a reference signal for quality measurement.

The channels and the signals mentioned above are examples in LTE, and names different from the names mentioned above may be used.

The channels and the signals are transmitted, for example, in predetermined portions in resources arranged in a time domain and a frequency domain. A radio frame may be formed by one or more frames in the time domain. Each of one or more frames in the time domain may be also referred to as a subframe. Further, the subframe may be formed by one or more slots in the time domain. Further, the slot may be formed by one or more symbols (OFDM symbols, SC-FDMA symbols, or the like) in the time domain. Each of the radio frame, the subframe, the slot, and the symbol represents a time unit in which a signal is transmitted. The radio frame, the subframe, the slot, and the symbol may have different corresponding names. For example, in an LTE system, the base station performs scheduling to allocate a radio resource (a frequency bandwidth, transmission power, or the like which can be used by each mobile station) to each mobile station. A minimum time unit of scheduling may be referred to as a transmission time interval (TTI). For example, one subframe may be referred to as a TTI, a plurality of consecutive subframes may be referred to as a TTI, or one slot may be referred to as a TTI.

A resource block (RB) is a resource allocation unit in the time domain and the frequency domain and may include one or more consecutive subcarriers in the frequency domain. In the time domain of the resource block, one or more symbols may be included, and a length of one slot, one subframe, or one TTI may be used. Each of one TTI and one subframe may be formed by one or more resource blocks. The structure of the radio frame described above is merely an example, and the number of subframes included in the radio frame, the number of slots included in the subframe, the number of symbols and resource blocks included in the slot, and the number of subcarriers included in the resource block can be modified in various ways.

In the embodiment of the present invention, it is assumed that URLLC data with high urgency are generated during transmission of eMBB data from the mobile station UE or the base station eNB. In this case, a portion of the resource allocated for transmission of the eMBB data is punctured, and the URLLC data are transmitted in the punctured portion.

Fig. 2 is a schematic diagram illustrating an example of transmitting URLLC data during transmission of eMBB data. Fig. 2 illustrates an example in which URLLC data corresponding to a transmission duration of two symbols are generated during transmission of eMBB data corresponding to a transmission duration of twenty symbols. Then, resources corresponding to the transmission duration of two symbols allocated for transmission of the eMBB data are punctured, and the URLLC data are transmitted in the punctured resources.

"Puncturing" represents that no signal is transmitted in a portion of a resource allocated for transmission of a signal. For example, as illustrated in Fig. 2, puncturing may be no transmission of all or some of the symbols for eMBB. In this case, the symbols for URLLC are transmitted instead of all or some of the symbols for eMBB which are not transmitted. The following description will proceed with an example in which all or some of the symbols are not transmitted, but it is also possible to implement puncturing through other techniques. For example, puncturing may be implemented by overriding information bits for eMBB with information bits for URLLC. In this case, some of segments before the eMBB data are encoded are used for URLLC. As another example, puncturing may be implemented by changing a modulation order for the eMBB data. For example, the modulation scheme for the eMBB data may be changed from QPSK (two bits) to 16QAM (four bits), and an URLLC signal may be embedded in the remaining two bits. As another example, the modulation order for the eMBB data may not be changed, and some bits may be shared by the eMBB data and the URLLC data. For example, when the modulation scheme is QPSK, one bit in the first half of two transmittable bits may be used for eMBB, and one bit in the second half may be used for URLLC. In this case, the bits for eMBB interrupted by URLLC are punctured.

In the case of transmitting the URLLC data, it is necessary to appropriately control a transmission parameter (for example, transmission power, a bandwidth, a transmission position, a modulation and coding scheme (MCS), or the like) for the URLLC data.

For the bandwidth and the transmission position, when the URLLC data are mapped out of a band allocated to the eMBB data, interference with other users or other channels may occur, and thus the bandwidth and the transmission position of the URLLC data may be limited within the band allocated to the eMBB data. On the other hand, when a transmission duration of the URLLC data would be increased as a result of limiting the bandwidth and the transmission position of the URLLC within the band allocated to the eMBB data, transmission of the URLLC data out of the band allocated to the eMBB data may be permitted in consideration of delay.

For the transmission power, it is difficult to perform long-period transmission power control (TPC) for the URLLC data that are generated unexpectedly, particularly, in the uplink. However, in order to guarantee high reliability, it is necessary to perform optimum transmission power control. For example, the transmission power for the URLLC data may be determined based on transmission power for the eMBB data, rather than based on closed loop transmission power control between the base station eNB and the mobile station UE. In order to improve reception quality of the URLLC data, the transmission power may be preferentially allocated to the URLLC data.

For the MCS, it is difficult to perform closed-loop control such as adaptive modulation and channel coding (AMC) for the URLLC data that are generated unexpectedly. In addition, for example, a packet error rate of approximately $10^{-1}$ is required for the eMBB data, whereas, for example, an initial packet request rate of approximately $10^{-5}$ is required for the URLLC data. For the URLLC data, it is necessary to select an MCS in which a required packet error rate is achieved in order to guarantee high reliability. For example, a notification of the MCS for the URLLC data may be given from the base station eNB to the mobile station UE in advance, or the mobile station UE may determine the MCS for the URLLC data autonomously. Alternatively, a correspondence between an MCS for the eMBB data and an MCS for the URLLC data may be defined, and the MCS for the URLLC may be determined based on the MCS for the eMBB data with reference to the correspondence. Alternatively, the MCS for the URLLC data in the downlink may be limited to a predetermined MCS in view of a relationship with transmission power control. Alternatively, the MCS for the URLLC data in the downlink may be determined by the base station eNB and provided to the mobile station UE together with information indicating a transmission power difference from a reference signal.

<Processing procedure>

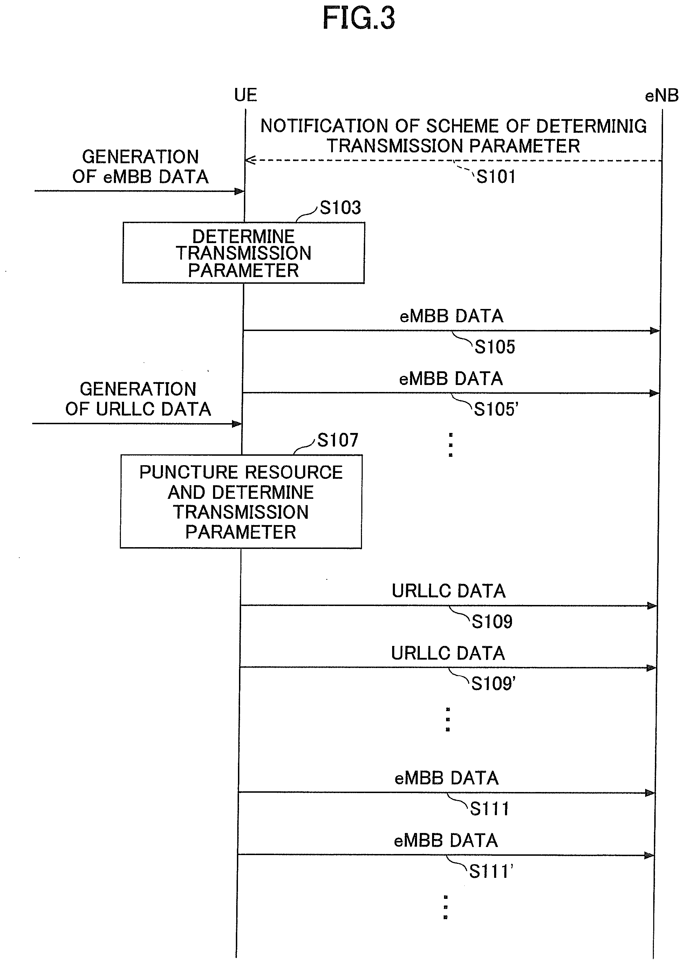

Fig. 3 is a sequence diagram of a radio communication method in the radio communication system according to the embodiment of the present invention.

First, the base station eNB may notify (for example, broadcast) the mobile station UE of a scheme of determining a transmission parameter for URLLC data (S101). For example, a scheme of determining a bandwidth and a transmission position includes a scheme of limiting the bandwidth and the transmission position of the URLLC data within a band allocated to eMBB data and a scheme of permitting transmission of the URLLC data out of the band allocated to the eMBB data as well. The base station eNB may give a notification indicating which scheme should be used among the schemes of determining the bandwidth and the transmission position to the mobile station UE. For example, a scheme of determining transmission power for the URLLC data includes a scheme of controlling power spectral density (PSD) of the URLLC data in the base station eNB to be substantially the same as that of eMBB data and a scheme of controlling total transmission power for the URLLC data in the mobile station UE to be substantially the same as that of the eMBB data. The base station eNB may give a notification indicating which scheme should be used among the schemes of determining the transmission power to the mobile station UE. For example, a scheme of determining an MCS for the URLLC data includes a scheme of notifying the mobile station UE of an MCS previously determined by the base station eNB, a scheme of autonomously determining by the mobile station UE, and a scheme of determining the MCS for the URLLC data based on an MCS for eMBB data with reference to the correspondence between the MCS for the eMBB data and the MCS for the URLLC data. The base station eNB may give a notification indicating which scheme should be used among the schemes of determining the MCS to the mobile station UE. When the correspondence between the MCS for the eMBB data and the MCS for the URLLC data is used, the base station eNB may give a notification of the correspondence to the mobile station UE. Alternatively, the notification of the correspondence between the MCS for the eMBB data and the MCS for the URLLC data may be given from the mobile station UE to the base station eNB.

When eMBB data to be transmitted are generated, the mobile station UE may transmit an SR to the base station eNB and request the base station eNB to allocate a resource. The base station eNB gives a notification indicating the allocation of the resource to the mobile station UE, and the mobile station UE determines a transmission parameter (transmission power, a bandwidth, a transmission position, an MCS, or the like) for the eMBB data in accordance with control of the base station eNB (scheduling, transmission power control, AMC, or the like) (S103).

The mobile station UE may transmit the eMBB data over a plurality of symbols using the transmission parameter for the eMBB data (S105, S105', ...).

When URLLC data are generated during the transmission of the eMBB data, the mobile station UE punctures a portion of the resource allocated for the transmission of the eMBB data (S107). When the notification of the scheme of determining the transmission parameter for the URLLC data is given from the base station eNB, the mobile station UE determines the transmission parameter for the URLLC data in accordance with the notified determination scheme. Alternatively, the mobile station UE may autonomously determine the transmission parameter for the URLLC data.

First, the bandwidth and the transmission position among the transmission parameters for the URLLC data will be first described.

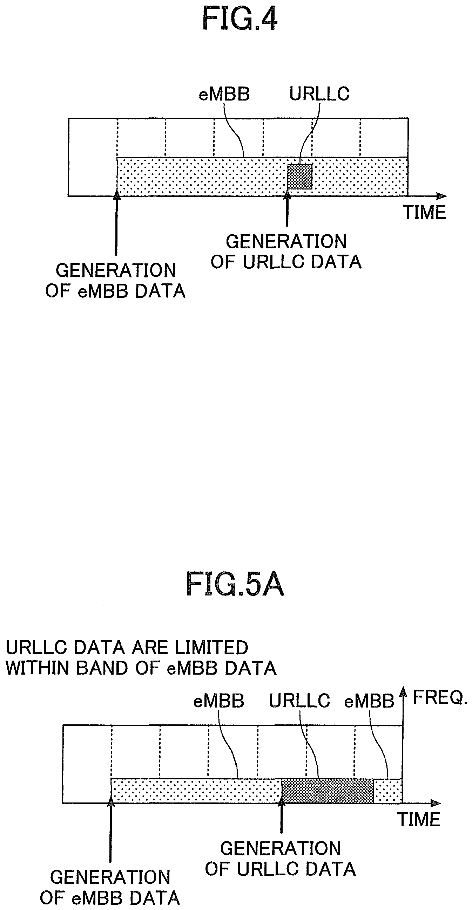

Fig. 4 is a diagram illustrating an example of transmitting the URLLC data within the band of the eMBB data. In the case of uplink transmission of the URLLC data illustrated in Fig. 3, when the URLLC data are mapped out of the band allocated to the eMBB data, interference with other users or other channels is likely to occur, and thus the bandwidth and the transmission position of the URLLC data may be limited within the band allocated to the eMBB data. Fig. 4 illustrates an example of transmitting the URLLC data using a part of the bandwidth allocated to the eMBB data, but the URLLC data may be transmitted using the entire bandwidth allocated to the eMBB data.

In the case of downlink transmission of the URLLC data, the base station eNB can control resource allocation for all the mobile stations UEs, and thus the bandwidth and the transmission position of the URLLC data in the downlink may not be limited within the band allocated to the eMBB data.

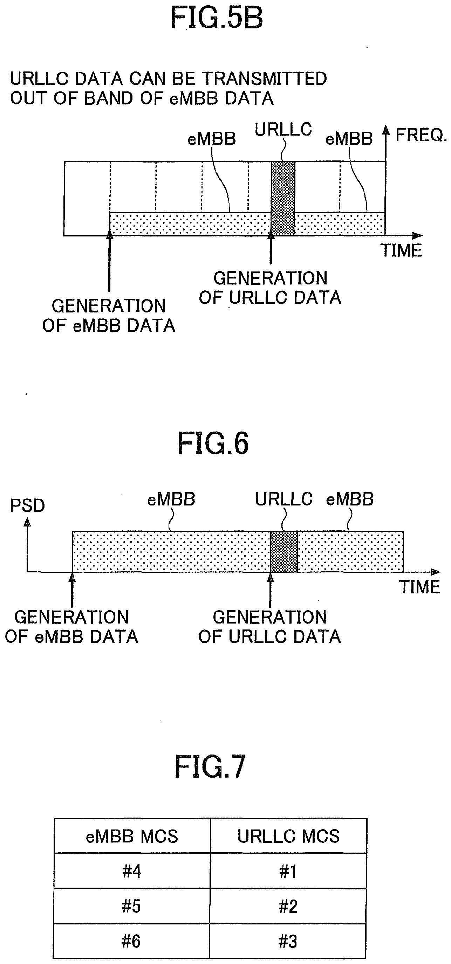

On the other hand, when a transmission duration of the URLLC data would be increased as a result of limiting the bandwidth and the transmission position of the URLLC within the band allocated to the eMBB data, transmission of the URLLC data out of the band allocated to the eMBB data may be permitted in consideration of delay. Fig. 5A is a diagram illustrating a case of transmitting the URLLC data within the band of the eMBB data and Fig. 5B is a diagram illustrating a case of transmitting the URLLC data within and out of the band of the eMBB data. For example, when a bandwidth allocated to the eMBB data is narrow, and a data amount of the URLLC data is large, a time required for transmission of the URLLC data is increased even if the URLLC data are transmitted using the entire bandwidth allocated to eMBB data as illustrated in Fig. 5A, and it may be unable to satisfy the requirement of the low delay. In this case, as illustrated in Fig. 5B, the transmission of the URLLC data out of the band allocated to the eMBB data may be also permitted.

As described above, in accordance with the scheme of determining the transmission parameter for the URLLC data provided by the base station eNB, or autonomously, the mobile station UE may determine whether the bandwidth and the transmission position of the URLLC data are limited within the band allocated to the eMBB data or the transmission of the URLLC data out of the band allocated to the eMBB data is also permitted. For example, whether the bandwidth and the transmission position of the URLLC data are limited within the band allocated to the eMBB data or the transmission of the URLLC data out of the band allocated to the eMBB data is also permitted may be determined based on the bandwidth allocated to the eMBB data and/or the data amount of the URLLC data.

Next, the transmission power among the transmission parameters for the URLLC data will be described. In the case of uplink transmission of the URLLC data illustrated in Fig. 3, the transmission power for the URLLC data may be determined based on the transmission power for the eMBB data. For example, the transmission power for the URLLC data may be controlled such that PSD of the URLLC data in the base station eNB is substantially the same as that of the eMBB data (referred to as a "pattern 1") or may be controlled such that total transmission power of the URLLC data in the mobile station UE is substantially the same as that of the eMBB data (referred to as a "pattern 2").

Fig. 6 is a diagram illustrating an example of transmission power control of the URLLC data. In Fig. 6, the transmission power is controlled such that the PSD in the base station eNB is constant (corresponding to the pattern 1). An example of a specific method of calculating the transmission power in this case will be described. In the following, total transmission power for each OFDM symbol of the eMBB data is denoted by $P_{eMBB}$, and total transmission power for each OFDM symbol of the URLLC data is denoted by $P_{URLLC}$. The calculation method of $P_{eMBB}$ is known, and, for example, $P_{eMBB}$ may be calculated for each symbol in accordance with the following formula.

$$P_{eMBB} = 10\log_{10}(M_{PUSCH}) + P_{O\_PUSCH} + \alpha \cdot PL + \Delta_{TF}(TF(i)) + f(i) \quad (1)$$

Here, $M_{PUSCH}$ is the number of transmission resource blocks (transmission bandwidth), $P_{O\_PUSCH}$ is a target reception level, $\alpha$ is a cell-specific transmission power control parameter, PL is a downlink path loss, $A_{TF}(TF(i))$ is a power offset depending on a transmission format, and f(i) is a cumulative value of transmission power control commands. In the formula, $P_{eMBB} \leq P_{CMAX}$ (maximum transmission power of the mobile station UE) is held, and when the maximum transmission power of the mobile station UE is exceeded by addition of f(i), $P_{CMAX}$ is used.

In the case of the pattern 1, the transmission power $P_{URLLC}$ for the URLLC data may be calculated in accordance with the following formula.

$$P_{URLLC} = P_{eMBB} \times (BW_{URLLC}/BW_{eMBB}) \quad (2)$$

Here, $BW_{URLLC}$ is a transmission bandwidth of the URLLC data, and $BW_{eMBB}$ is a transmission bandwidth of the eMBB data.

As a specific method of calculating the transmission power in the case of the pattern 2, total transmission power for each OFDM symbol of the eMBB data and total transmission power for each OFDM symbol of the URLLC data are also denoted by $P_{eMBB}$ and $P_{URLLC}$, respectively, and when the calculation method of $P_{eMBB}$ is known, the transmission power $P_{URLLC}$ of the URLLC data may be calculated in accordance with the following formula.

$$P_{URLLC} = P_{eMBB} \times (BW_{eMBB}/BW_{URLLC}) \quad (3)$$

Here, when the URLLC data are transmitted using a part of the bandwidth allocated to the eMBB data as illustrated in Fig. 4, that is, when $BW_{eMBB} > BW_{URLLC}$, the transmission power for the eMBB data transmitted in the same symbol as the URLLC data is calculated by $P_{eMBB}$-$P_{URLLC}$.

As described above, the transmission power $P_{URLLC}$ for the URLLC data can be calculated based on the transmission power $P_{eMBB}$ for the eMBB data. However, since the URLLC data are data with high urgency, the transmission power may be more preferentially allocated to the URLLC data within total transmission power than other data. For example, when $BW_{eMBB} > BW_{URLLC}$, the transmission power for the eMBB data in the symbol in which the URLLC data are embedded may be set to zero. When the transmission power is preferentially allocated to the URLLC data as described above, it is possible to improve reception quality of the URLLC data.

Alternatively, the transmission power for the URLLC data may be offset in order to improve reception quality of the URLLC data. For example, formulas (2) and (3) may be expressed as follows.

$$P_{URLLC} = P_{eMBB} \times (BW_{URLLC}/BW_{eMBB}) + \delta \quad (2')$$

$$P_{URLLC} = P_{eMBB} \times (BW_{eMBB}/BW_{URLLC}) + \delta \quad (3')$$

Here, $\delta$ is an offset value.

The method of calculating the transmission power for the URLLC data is merely an example, and the transmission power for the URLLC data may be calculated using other methods. For example, using formula (1) for calculating the transmission power for the eMBB data, the transmission power for the URLLC data may be obtained similarly, by using the bandwidth of the URLLC data for $M_{PUSCH}$, instead of using the parameter $M_{PUSCH}$ as above.

In the case of downlink transmission of the URLLC data, the mobile station UE receives information indicating a transmission power difference between a data signal and a reference signal (RS) from the base station eNB, and demodulates the data signal. When high-order modulation (for example, 16QAM, or the like) is used for the URLLC data, demodulation accuracy may be degraded unless the mobile station UE is aware of the transmission power difference. Therefore, the modulation scheme to be applied to URLLC may be limited to a predetermined modulation scheme such as low-order modulation. The low-order modulation is a modulation scheme according to which the mobile station UE can demodulate the data signal without being aware of the transmission power difference from the reference signal, and examples of the low-order modulation include QPSK, BPSK, and so on. Further, a notification indicating that the modulation scheme is limited to the low-order modulation may be given from the base station eNB to the mobile station UE by means of, for example, L1/L2 control information or broadcast information. Alternatively, in order to reduce overhead, the number of modulation schemes for the URLLC data may be limited to one (for example, QPSK).

Alternatively, the base station eNB may give a notification of the modulation scheme for the URLLC data and information indicating the transmission power difference from the reference signal to the mobile station UE by means of, for example, L1/L2 control information or broadcast information. The notification of the modulation scheme for the URLLC data and the notification of the information indicating the transmission power difference from the reference signal may be given with different periodicity or may be given with the same periodicity. For example, the notification of the modulation scheme may be given for each subframe by means of downlink L1/L2 control information, and the notification of the information indicating the transmission power difference may be given by means of RRC signaling or broadcast information. Alternatively, a notification of the difference from the transmission power for the eMBB data may be given on the premise that the URLLC data uses the same reference signal as the eMBB data. Alternatively, a ratio or a difference between the transmission power for the URLLC data and the transmission power for the eMBB data may be set in advance (for example, the transmission power for the URLLC data may be set to be twice the transmission power for the eMBB data).

As described above, the mobile station UE may determine the transmission power for the URLLC data in accordance with the scheme of determining the transmission parameter for the URLLC data provided by the base station eNB or autonomously.

Next, the MCS among the transmission parameters for the URLLC data will be described.

A notification of the MCS for the URLLC data may be given from the base station eNB to the mobile station UE in advance so that an MCS optimum for the URLLC data is selected.

Alternatively, in order to reduce overhead, the mobile station UE may autonomously determine the MCS. When the mobile station UE autonomously determines the MCS, the determined MCS may be included in a part of the transmission packet of the URLLC data as control information and a notification of the determined MCS may be given to the base station eNB. Alternatively, a correspondence between an MCS for the eMBB data and an MCS for the URLLC data may be defined, and the mobile station UE may determine the MCS for the URLLC data based on the MCS for the eMBB data with reference to the correspondence. Fig. 7 is a diagram illustrating an example of the correspondence between the MCS for the eMBB data and the MCS for the URLLC data. The correspondence illustrated in Fig. 7 may be set in the base station eNB and the mobile station UE in advance, may be broadcast from the base station eNB to the mobile station UE, or may be provided from the mobile station UE to the base station eNB or from the base station to the mobile station UE in advance.

Further, the modulation scheme and the coding rate for the MCS used for transmission of the URLLC data may be the same as the modulation scheme and the coding rate for the MCS used for transmission of the eMBB data or may be defined separately from the modulation scheme and the coding rate for the MCS used for transmission of the eMBB data in accordance with requirements. If the modulation scheme and the coding rate for the MCS used for transmission of the URLLC data are defined separately from the modulation scheme and the coding rate for the MCS used for transmission of the eMBB data, the base station eNB and the mobile station UE may be assumed to use the same MCS number for the eMBB data and the URLLC data.

In the case of downlink transmission of the URLLC data, the base station eNB may also select the MCS provided to the mobile station UE in advance, may autonomously determine the MCS, or may determine the MCS based on the correspondence between the MCS for the eMBB data and the MCS for the URLLC data.

As described above regarding the transmission power control, the MCS for the URLLC data in the downlink may be limited to a predetermined MCS.

As described above, the mobile station UE may determine the MCS for the URLLC data in accordance with the scheme of determining the transmission parameter of the URLLC data provided by the base station eNB or autonomously.

The mobile station UE transmits the URLLC data using the transmission parameter for the URLLC data in the punctured portion (S109). The mobile station UE may transmit the URLLC data over a plurality of symbols (S109, S109', ...). The mobile station UE may request the base station eNB to allocate a resource used for transmitting the URLLC data and then transmit the URLLC data in the resource allocated by the base station eNB or may transmit the URLLC data without requesting the base station eNB to allocate the resource used for transmitting the URLLC data.

When the base station eNB allocates the resource to the URLLC data, the base station eNB can receive the URLLC data in the allocated resource. On the other hand, when the base station eNB does not allocate the resource to the URLLC data, it is necessary for the base station eNB to detect that the URLLC data are embedded and transmitted during the transmission of the eMBB data. For example, candidates in which the URLLC data are embedded may be defined in advance, and the base station eNB may perform blind estimation within the candidates for detection. In this case, the detection may be performed using a cyclic redundancy check (CRC) of URLLC, or the detection may be performed by adding a preamble to the URLLC data for easier detection.

When the mobile station UE completes the transmission of the URLLC data, the mobile station UE may resume the transmission of the eMBB data (S111, S111',...).

Fig. 3 illustrates uplink communication from the mobile station UE to the base station eNB, but the present invention is not limited to uplink communication but can be also applied to downlink communication from the base station eNB to the mobile station UE. In the case of downlink communication, instead of requesting the base station eNB to allocate a resource used for the mobile station UE to transmit the eMBB data and/or the URLLC data, the eMBB data and/or the URLLC data are transmitted in a resource allocated through scheduling performed by the base station eNB. The transmission parameter (for example, transmission power, a bandwidth, a transmission position, or an MCS) for the URLLC data in the case of downlink communication is determined as described above.

<Functional configuration>

As described above, since the present invention is not limited to uplink communication but can be also applied to downlink communication, a transmitter that is an apparatus for transmitting the eMBB data and the URLLC data and a receiver that is an apparatus for receiving the eMBB data and the URLLC data will be described.

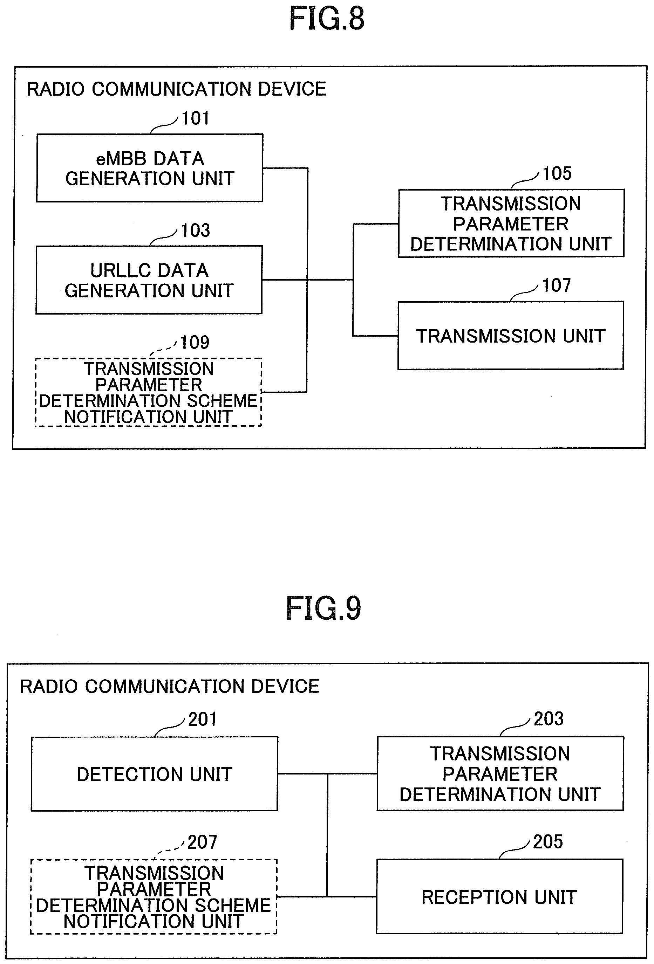

Fig. 8 is a block diagram of a transmitter 10 according to an embodiment of the present invention.

The transmitter 10 includes an eMBB data generation unit 101, a URLLC data generation unit 103, a transmission parameter determination unit 105, and a transmission unit 107. In the case of downlink communication, the transmitter 10 corresponds to the base station eNB, and in this case, the transmitter 10 may further include a transmission parameter determination scheme notification unit 109 that gives a notification of a scheme of determining a transmission parameter for URLLC data to the mobile station UE.

The eMBB data generation unit 101 generates data (eMBB data) to be transmitted in accordance with eMBB. In the case in which the transmitter 10 is included in the mobile station UE, the eMBB data may be transmitted using a resource allocated by the base station eNB in response to an SR transmitted from the mobile station UE. In the case in which the transmitter 10 is included in the base station eNB, the eMBB data may be transmitted using a resource allocated through scheduling in the base station eNB.

The URLLC data generation unit 103 generates data (URLLC data) to be transmitted in accordance with URLLC. In the case in which the transmitter 10 is included in the mobile station UE, the URLLC data may be transmitted using a resource allocated by the base station eNB in response to the SR transmitted from the mobile station UE or may be transmitted in candidates of resources defined in advance without using an SR transmitted from the mobile station UE. In the case in which the transmitter 10 is included in the base station eNB, the eMBB data may be transmitted using a resource allocated through scheduling in the base station eNB or may be transmitted in candidates of resources defined in advance without scheduling in the base station eNB.

The transmission parameter determination unit 105 determines a transmission parameter for the eMBB data and a transmission parameter for the URLLC data. For example, the transmission parameter determination unit 105 determines a transmission parameter such as transmission power, a bandwidth, a transmission position, or a modulation and coding scheme for the eMBB data in accordance with the control (scheduling, transmission power control, AMC, or the like) of the base station eNB. Further, the transmission parameter determination unit 105 may determine a bandwidth and a transmission position of the URLLC data within a band allocated for the transmission of the eMBB data or may determine a bandwidth and a transmission position of the URLLC data out of the band allocated for the transmission of the eMBB data in addition to within the band allocated for transmission of the eMBB data. Further, the transmission parameter determination unit 105 may determine transmission power for the URLLC data based on the transmission power for the eMBB data or may preferentially allocate transmission power to the URLLC data in order to improve reception quality of the URLLC data. Further, the transmission parameter determination unit 105 may select an MCS determined in advance by the base station eNB or may autonomously determine an MCS, or for example, the transmission parameter determination unit 105 may determine an MCS for the URLLC data based on the MCS for the eMBB data with reference to the correspondence between the MCS for the eMBB data and the MCS for the URLLC data.

When the URLLC data are generated during the transmission of the eMBB data, the transmission unit 107 punctures a portion of the resource allocated for transmission of eMBB, transmits the eMBB data in the unpunctured portion, and transmits the URLLC data in the punctured portion.

Fig. 9 is a block diagram of a receiver 20 according to an embodiment of the present invention.

The receiver 20 includes a detection unit 201, a transmission parameter determination unit 203, and a reception unit 205. In the case of uplink communication, the receiver 20 corresponds to the base station eNB, and in this case, the receiver 20 may further include a transmission parameter determination scheme notification unit 207 that gives a notification of a scheme of determining a transmission parameter for URLLC data to the mobile station UE.

The detection unit 201 detects that a portion of the resource allocated for the transmission of the eMBB data is punctured, and the URLLC data are transmitted in the punctured portion. When the base station eNB allocates the resource, the detection unit 201 may detect the transmission of the URLLC data based on the allocation of the resource. Alternatively, the detection unit 201 may detect the transmission of the URLLC data by performing the blind estimation within candidates in which the URLLC data are embedded.

The transmission parameter determination unit 203 determines a transmission parameter for the eMBB data and a transmission parameter for the URLLC data. For example, the transmission parameter determination unit 203 determines a transmission parameter such as transmission power, a bandwidth, a transmission position, or a modulation and coding scheme for the eMBB data in accordance with the control(scheduling, transmission power control, AMC, or the like) of the base station eNB. Further, the transmission parameter determination unit 203 may determine a bandwidth and a transmission position of the URLLC data in accordance with the scheme of determining the transmission parameter for the URLLC data. Further, the transmission parameter determination unit 203 may determine downlink transmission power for the URLLC data based on the information indicating a transmission power difference from a reference signal. Further, the transmission parameter determination unit 203 may select an MCS previously determined by the base station eNB or may select an MCS which is autonomously determined and provided by the mobile station UE, and for example, the transmission parameter determination unit 203 may determine an MCS for the URLLC data based on the MCS for the eMBB data with reference to the correspondence between the MCS for the eMBB data and the MCS for the URLLC data.

The reception unit 205 receives the eMBB data using the transmission parameter for the eMBB data in the unpunctured portion and receives the URLLC data using the transmission parameter for the URLLC data in the punctured portion.

<Hardware configuration>

The block diagrams used to describe the above-mentioned embodiment illustrate blocks of functional units. The functional blocks (components) are implemented by an arbitrary combination of hardware and/or software. A means for implementing each functional block is not particularly limited. That is, each functional block may be implemented by one apparatus in which a plurality of elements are physically and/or logically coupled or by a plurality of apparatuses that are physically and/or logically separated from each other and are connected directly and/or indirectly (for example, in a wired manner and/or wirelessly).

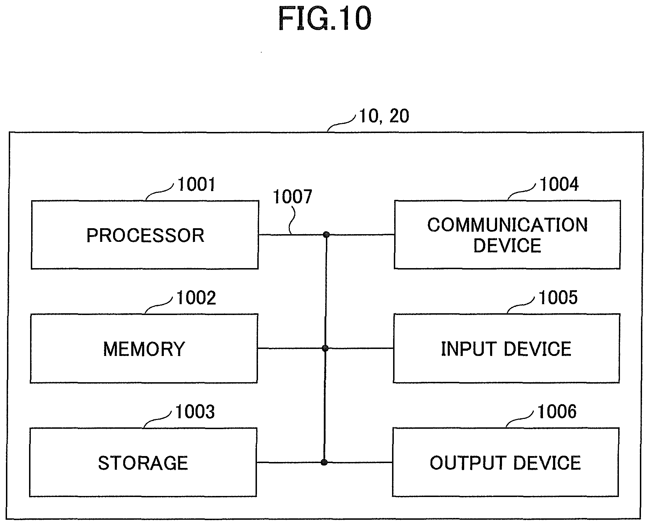

For example, the transmitter 10, the receiver 20, or the like according to the embodiment of the invention may function as a computer that performs a radio communication method according to this embodiment. Fig. 10 is a diagram illustrating an example of a hardware configuration of the transmitter 10 or the receiver 20 according to this embodiment. Each of the transmitter 10 and the receiver 20 may be physically configured as a computer device including, for example, a processor 1001, a memory 1002, a storage 1003, a communication device 1004, an input device 1005, an output device 1006, and a bus 1007.

In the following description, the term "device" can be substituted with, for example, a circuit, an apparatus, or a unit. The hardware configuration of the transmitter 10 or the receiver 20 may include one or a plurality of devices illustrated in Fig. 10 or may not include some of the devices.

Each function of the transmitter 10 and the receiver 20 may be implemented by the following process: predetermined software (program) is read onto hardware such as the processor 1001 or the memory 1002, and the processor 1001 performs an operation to control the communication of the communication device 1004 and the reading and/or writing of data from and/or to the memory 1002 and the storage 1003.

The processor 1001 operates, for example, an operating system to control the overall operation of the computer. The processor 1001 may be a central processing unit (CPU) including, for example, an interface with peripheral devices, a control device, an arithmetic device, and a register. For example, the eMBB data generation unit 101, the URLLC data generation unit 103, the transmission parameter determination unit 105, the transmission parameter determination scheme notification unit 109, the detection unit 201, the transmission parameter determination unit 203, the transmission parameter determination scheme notification unit 207, and so on may be implemented in the processor 1001.

The processor 1001 reads a program (program code), a software module, and/or data from the storage 1003 and/or the communication device 1004 to the memory 1002 and performs various types of processes according to the program, the software module, or the data. A program that causes a computer to perform at least some of the operations described in the embodiment may be used. For example, the eMBB data generation unit 101 in the transmitter 10 may be implemented by a control program that is stored in the memory 1002 and is executed by the processor 1001. The other functional blocks may be similarly implemented. In the embodiment, the above-mentioned various processes are performed by one processor 1001. However, the processes may be simultaneously or sequentially performed by two or more processors 1001. The processor 1001 may be mounted on one or more chips. The program may be transmitted over the network through a telecommunication line.

The memory 1002 is a computer-readable recording medium and may include, for example, at least one of a read only memory (ROM), an erasable programmable ROM (EPROM), an electrically erasable programmable ROM (EEPROM), and a random access memory (RAM). The memory 1002 may be also referred to as, for example, a register, a cache, or a main memory (main storage device). The memory 1002 can store, for example, an executable program (program code) and a software module that can perform a radio communication method according to the embodiment of the invention.

The storage 1003 is a computer-readable recording medium and may include, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage 1003 may be also referred to as an auxiliary storage device. The above-mentioned storage medium may be, for example, a database, a server, and other suitable media including the memory 1002 and/or the storage 1003.

The communication device 1004 is hardware (a transmission and reception device) for communicating with a computer through a wired and/or wireless network and is also referred to as, for example, a network device, a network controller, a network card, or a communication module. For example, the transmission unit 107, the reception unit 205, or the like may be implemented by the communication device 1004.

The input device 1005 is an input unit (for example, a keyboard, a mouse, a microphone, a switch, a button, or a sensor) that receives an input from the outside. The output device 1006 is an output unit (for example, a display, a speaker, or an LED lamp) that performs an output process to the outside. The input device 1005 and the output device 1006 may be integrated into a single device (for example, a touch panel).

The devices such as the processor 1001 and/or the memory 1002 are connected to each other via the bus 1007 for information communication. The bus 1007 may be a single bus or the devices may be connected to each other by different buses.

Each of the transmitter 10 and the receiver 20 may include hardware such as a microprocessor, a digital signal processor (DSP), an application specific integrated circuit (ASIC), a programmable logic device (PLD), and a field programmable gate array (FPGA). Some or all of the functional blocks may be implemented by the hardware. For example, the processor 1001 may be implemented by at least one of these hardware components.

<Effects of embodiment of present invention>

According to an embodiment of the present invention, it is possible to transmit, with low delay, data with high urgency, while reducing interference between the data with high urgency and other data. For example, when a packet of URLLC data with high urgency is generated during transmission of eMBB data, it is possible to embed the URLLC data in the eMBB data and transmit the URLLC data, and thus it is possible to transmit the URLLC data with low delay.

Further, it is possible to guarantee high reliability of the URLLC data by appropriately determining a transmission parameter for the URLLC data. For example, since transmission power for the URLLC data is determined based on transmission power for the eMBB data, it is possible to perform transmission power control immediately without performing closed-loop control of transmission power for the URLLC data between the base station eNB and the mobile station UE. For example, a correspondence between an MCS for the eMBB data and an MCS for the URLLC data is defined, and the MCS for the URLLC data is determined based on the correspondence, and thus it is possible to determine the MCS immediately. Alternatively, an MCS for the URLLC data may be determined by the base station eNB, and thus an optimum MCS can be selected.

It is possible to reduce interference to other users or other channels by limiting a bandwidth and a transmission position of the URLLC data within a band allocated to the eMBB data. Alternatively, it is possible to reduce delay of the URLLC data by permitting the transmission of the URLLC data out of the band allocated to the eMBB data as well.

Further, when a preamble or the like for detection is defined, the receiver can blindly detect that the URLLC data are transmitted during the transmission of the eMBB data.

Puncturing may be implemented by overriding information bits for eMBB with information bits for URLLC. In this case, the receiver need not blindly detect that the URLLC data are transmitted during the transmission of the eMBB data. Further, puncturing may be implemented by not transmitting some signals of the eMBB data by changing a modulation order for the eMBB data. In this case, there is a possibility of becoming unable to receive the eMBB data, but it is possible to eliminate the loss of the eMBB caused by puncturing. Further, puncturing may be implemented by sharing some bits between the eMBB data and the URLLC data without changing a modulation order for the eMBB data. In this case, it is possible to improve detection accuracy of the eMBB data.

<Supplementary Explanation>

Each aspect/embodiment described in the specification may be applied to systems using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), and other suitable systems and/or next-generation systems that have functionality enhanced based on these systems.

The terms "system" and "network" used in the specification are interchangeably used.

In the specification, a specific operation performed by the base station may be performed by an upper node of the base station. In a network having one or a plurality of network nodes including the base station, it is clearly understood that various operations performed for communication with the user equipment apparatus can be performed by the base station and/or a network node (for example, including an MME or an S-GW without limitation) other than the base station. The number of network nodes other than the base station is not limited to one, and a plurality of other network nodes (for example, an MME and an S-GW) may be combined with each other.

Information or the like can be output from a higher layer (or a lower layer) to a lower layer (or a higher layer). Information or the like may be input or output via a plurality of network nodes.

The input or output information or the like may be stored in a specific location (for example, a memory) or may be managed in a management table. The input or output information or the like may be overwritten, updated, or edited. The output information or the like may be deleted. The input information or the like may be transmitted to another apparatus.

The transmission of information is not limited to the aspects/embodiments described in the specification and may be performed by other means. For example, the transmission of information may be performed by physical layer signaling (for example, downlink control information (DCI) or uplink control information (UCI)), higher layer signaling (for example, radio resource control (RRC) signaling, medium access control (MAC) signaling, or broadcast information (a master information block (MIB) and a system information block (SIB))), another signal, or a combination thereof. The RRC signaling may be also referred to as an RRC message and may be, for example, an RRC connection setup message or an RRC connection reconfiguration message.

Determination may be made based on a value (0 or 1) represented by 1 bit, may be made based on a true or false value (boolean: true or false), or may be made based on comparison with a numerical value (for example, comparison with a predetermined value).

Regardless of the fact that software is referred to as software, firmware, middleware, a microcode, a hardware description language, or another name, the software is broadly interpreted to include an instruction, an instruction set, a code, a code segment, a program code, a program, a sub-program, a software module, an application, a software application, a software package, a routine, a subroutine, an object, an executable file, an execution thread, a procedure, a function, or the like.

Software, an instruction, or the like may be transmitted or received via a transmission medium. For example, when software is transmitted from a website, a server, or another remote source using a wired technology such as a coaxial cable, an optical cable, a twisted pair, and a digital subscriber line (DSL) and/or a wireless technology such as an infrared ray, radio, and microwaves, the wired technology and/or the wireless technology is included in the definition of a transmission medium.

The information, the signal, and the like described in the specification may be represented using any of various technologies. For example, the data, the instruction, the command, the information, the signal, the bit, the symbol, the chip, and the like mentioned throughout the description may be represented by a voltage, a current, an electromagnetic wave, a magnetic field, or a magnetic particle, an optical field or a photon, or any combination thereof.

The terms described in the specification and/or terms necessary to understand the specification may be replaced with terms that have same or similar meanings. For example, a channel and/or a symbol may be a signal. A signal may be a message. A component carrier (CC) may be referred to as a carrier frequency, a cell, or the like.

The information, the parameter, or the like described in the specification may be represented by an absolute value, may be represented by a relative value from a predetermined value, or may be represented by another piece of corresponding information. For example, a radio resource may be indicated using an index.

The names used for the above-described parameters are not limited in any respect. Further, a numerical expression or the like in which the parameters are used can be different from the numerical expression disclosed explicitly in the specification. Since various channels (for example, a PUCCH and a PDCCH) and information elements (for example, TPC) can be identified with any suitable names, various names allocated to the various channels and the information elements are not limited in any respect.

The terms "determining" and "deciding" used in the specification include various operations. The terms "determining" and "deciding" can include, for example, "determination" and "decision" for calculating, computing, processing, deriving, investigating, looking-up (for example, looking-up in a table, a database, or another data structure), and ascertaining operations. In addition, the terms "determining" and "deciding" can include "determination" and "decision" for receiving (for example, information reception), transmitting (for example, information transmission), input, output, and accessing (for example, accessing data in a memory) operations. The terms "determining" and "deciding" can include "determination" and "decision" for resolving, selecting, choosing, establishing, and comparing operations. That is, the terms "determining" and "deciding" can include "determination" and "decision" for any operation.

The term "based on" used in the specification does not mean "only based on" unless otherwise stated. In other words, the term "based on" means both "only based on" and "at least based on".

When reference is made to elements in which terms "first," "second," and the like are used in the specification, the number or the order of the elements is not generally limited. These terms can be used in the specification as a method to conveniently distinguish two or more elements from each other. Accordingly, reference to first and second elements does not imply that only two elements are employed or the first element is prior to the second element in some ways.

The terms "include" and "including" and the modifications thereof are intended to be inclusive, similarly to the term "comprising", as long as they are used in the specification or the claims. In addition, the term "or" used in the specification or the claims does not mean exclusive OR.

In each aspect/embodiment described in the specification, for example, the order of the processes in the procedure, the sequence, and the flowchart may be changed unless a contradiction arises. For example, for the method described in the specification, elements of various steps are presented in the exemplified order. However, the invention is not limited to the presented specific order.

The aspects/embodiments described in the specification may be individually used, may be combined, or may be switched during execution. In addition, transmission of predetermined information (for example, transmission of "being X") is not limited to being performed explicitly, but may be performed implicitly (for example, the transmission of the predetermined information is not performed).

The invention has been described in detail above. It will be apparent to those skilled in the art that the invention is not limited to the embodiments described in the specification. Various modifications and changes can be made, without departing from the scope and spirit of the invention described in the claims. Therefore, the embodiments described in the specification are illustrative and do not limit the invention.

The present international application is based on and claims priority to Japanese Patent Application No. 2016-094940 filed on May 10, 2016, the entire contents of which are hereby incorporated by reference.

EXPLANATIONS OF REFERENCE NUMERALS

eNB base station
UE mobile station
10 transmitter
101 eMBB data generation unit
103 URLLC data generation unit
105 transmission parameter determination unit
107 transmission unit
109 transmission parameter determination scheme notification unit
20 receiver
201 detection unit
203 transmission parameter determination unit
205 reception unit
207 transmission parameter determination scheme notification unit
1001 processor
1002 memory
1003 storage
1004 communication device
1005 input device
1006 output device

1007 bus

**Claims**

1. A radio communication apparatus functioning as a transmitter in a radio communication system including the transmitter and a receiver, comprising:

   a first data generation unit that generates first data which are to be transmitted in accordance with a first transmission scheme;
   a second data generation unit that generates second data which are to be transmitted in accordance with a second transmission scheme;
   a transmission parameter determination unit that determines a first transmission parameter for the first data and a second transmission parameter for the second data; and
   a transmission unit that, when the second data are generated during transmission of the first data, punctures a portion of a resource allocated for the transmission of the first data, transmits the first data using the first transmission parameter in an unpunctured portion, and transmits the second data using the second transmission parameter in the punctured portion.

2. The radio communication apparatus according to claim 1,
   wherein the transmission parameter determination unit determines a bandwidth and a transmission position of the second data within a band allocated for the transmission of the first data or within and out of the band allocated for the transmission of the first data, and determines transmission power for the second data based on transmission power for the first data.

3. The radio communication apparatus according to claim 1 or 2,
   wherein the transmission parameter determination unit preferentially allocates transmission power to the second data.

4. The radio communication apparatus according to any one of claims 1 to 3,
   wherein the transmission parameter determination unit selects a modulation and coding scheme for the second data based on a modulation and coding scheme for the first data with reference to a correspondence between the modulation and coding scheme for the first data and the modulation and coding scheme for the second data.

5. The radio communication apparatus according to any one of claims 1 to 4,
   wherein the transmission parameter determination unit limits a modulation scheme to be applied to the second data to a predetermined modulation scheme.

6. The radio communication apparatus according to any one of claims 1 to 4,
   wherein the transmission parameter determination unit determines a modulation scheme for the second data, and the transmission unit transmits the modulation scheme for the second data and information indicating a transmission power difference between the second data and a reference signal to the receiver.

7. A radio communication apparatus functioning as a receiver in a radio communication system including a transmitter and the receiver, comprising:

   a detection unit that detects that a portion of a resource allocated for transmission of first data transmitted in accordance with a first transmission scheme is punctured, and second data are transmitted in accordance with a second transmission scheme in the punctured portion;
   a transmission parameter determination unit that determines a first transmission parameter for the first data and a second transmission parameter for the second data; and
   a reception unit that receives the first data using the first transmission parameter in an unpunctured portion and receives the second data using the second transmission parameter in the punctured portion.

8. A radio communication method in a radio communication apparatus functioning as a transmitter in a radio communication system including the transmitter and a receiver, comprising the steps of:

   generating first data which are to be transmitted in accordance with a first transmission scheme;

determining a first transmission parameter for the first data;

transmitting the first data;

generating second data which are to be transmitted with a second transmission scheme;

determining a second transmission parameter for the second data; and

when the second data are generated during transmission of the first data, puncturing a portion of a resource allocated for transmission of the first data and transmitting the second data using the second transmission parameter in the punctured portion.

9. A radio communication method in a radio communication apparatus functioning as a receiver in a radio communication system including a transmitter and the receiver, comprising the steps of:

detecting that a portion of a resource allocated for transmission of first data transmitted in accordance with a first transmission scheme is punctured, and second data are transmitted in accordance with a second transmission scheme in the punctured portion;

determining a first transmission parameter for the first data and a second transmission parameter for the second data; and

receiving the first data using the first transmission parameter in an unpunctured portion and receiving the second data using the second transmission parameter in the punctured portion.

# FIG.1

# FIG.2

TRANSMISSION DURATION OF URLLC
(FOR EXAMPLE, 2 SYMBOLS)

URLLC
DATA

URLLC

eMBB

FREQUENCY

TIME

L1/L2 CONTROL
INFORMATION
FOR eMBB

eMBB
DATA

PUNCTURING
OF
eMBB DATA

# FIG.3

UE                    eNB

NOTIFICATION OF SCHEME OF DETERMINIG
TRANSMISSION PARAMETER

GENERATION
OF eMBB DATA

S101

S103

DETERMINE
TRANSMISSION
PARAMETER

eMBB DATA

S105

eMBB DATA

S105'

GENERATION
OF URLLC DATA

S107

PUNCTURE RESOURCE
AND DETERMINE
TRANSMISSION
PARAMETER

URLLC DATA

S109

URLLC DATA

S109'

eMBB DATA

S111

eMBB DATA

S111'

# FIG.4

eMBB          URLLC

GENERATION
OF URLLC DATA

TIME

GENERATION
OF eMBB DATA

# FIG.5A

URLLC DATA ARE LIMITED
WITHIN BAND OF eMBB DATA

eMBB    URLLC   eMBB   FREQ.

TIME

GENERATION
OF URLLC DATA

GENERATION
OF eMBB DATA

# FIG.5B

URLLC DATA CAN BE TRANSMITTED
OUT OF BAND OF eMBB DATA

# FIG.6

# FIG.7

| eMBB MCS | URLLC MCS |
|----------|-----------|
| #4       | #1        |
| #5       | #2        |
| #6       | #3        |

# FIG.8

RADIO COMMUNICATION DEVICE

101

eMBB DATA
GENERATION UNIT

103

URLLC DATA
GENERATION UNIT

109

TRANSMISSION
PARAMETER
DETERMINATION SCHEME
NOTIFICATION UNIT

105

TRANSMISSION
PARAMETER
DETERMINATION UNIT

107

TRANSMISSION UNIT

# FIG.9

RADIO COMMUNICATION DEVICE

201

DETECTION UNIT

207

TRANSMISSION
PARAMETER
DETERMINATION SCHEME
NOTIFICATION UNIT

203

TRANSMISSION
PARAMETER
DETERMINATION UNIT

205

RECEPTION UNIT

# FIG.10

<div align="center">

**INTERNATIONAL SEARCH REPORT**

</div>

| | International application No. |
|---|---|
| | PCT/JP2017/017239 |

**A. CLASSIFICATION OF SUBJECT MATTER**
*H04W72/04*(2009.01)i, *H04W52/28*(2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | QUALCOMM, 5G Views on Technology &<br>Standardization, 3GPP workshop 2015-09-17_18_<br>RAN_5G RWS-150012, 2015.09.01, slide 16-17 | 1,5-9<br>3<br>2,4 |
| X<br>Y<br>A | Spreadtrum Communications, Discussion on<br>numerology and frame structure, 3GPP TSG-RAN<br>WG1#84b R1-162549, 2016.04.01 | 1,5-9<br>3<br>2,4 |
| Y<br>A | JP 2010-541432 A  (Telefonaktiebolaget LM<br>Ericsson (publ)),<br>24 December 2010 (24.12.2010),<br>paragraphs [0042] to [0044]; fig. 7<br>& US 2010/0246513 A1<br>paragraphs [0066] to [0069]; fig. 7<br>& WO 2009/043375 A1       & CN 101816144 A | 3<br>2 |

☐ Further documents are listed in the continuation of Box C.     ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    09 June 2017 (09.06.17) | Date of mailing of the international search report<br>    27 June 2017 (27.06.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016094940 A